# EUROPEAN PATENT SPECIFICATION

(11) **EP 4 109 053 B1**
(45) Date of publication and mention of the grant of the patent: **24.01.2024**
(21) Application number: 22181069.0
(22) Date of filing: 24.06.2022
(51) Int. Cl.: G01D 21/00, H04L 67/12, H04W 4/38

(54) **DATA PROCESSING APPARATUS, DATA PROCESSING METHOD, AND DATA PROCESSING PROGRAM**
DATENVERARBEITUNGSVORRICHTUNG, DATENVERARBEITUNGSVERFAHREN UND DATENVERARBEITUNGSPROGRAMM
APPAREIL DE TRAITEMENT DES DONNÉES, PROCÉDÉ DE TRAITEMENT DES DONNÉES ET PROGRAMME DE TRAITEMENT DES DONNÉES

(30) Priority: 25.06.2021 JP 2021105859
(43) Date of publication of application: 28.12.2022
(73) Proprietor: Yokogawa Electric Corporation, Musashino-shi, Tokyo 180-8750 (JP)
(72) Inventor: Shimomura, Takanori, Musashino-shi, Tokyo (JP); Sakurai, Toshihiko, Musashino-shi, Tokyo (JP); Suzuki, Kimihiro, Musashino-shi, Tokyo (JP)
(74) Representative: Grünecker Patent- und Rechtsanwälte PartG mbB

(56) References cited:
- US-A1- 2013 201 316
- US-A1- 2020 271 488
- US-B1- 11 016 129

## Description

### BACKGROUND

### 1. TECHNICAL FIELD

The present invention relates to a data processing apparatus, a data processing method and a data processing program.

### 2. RELATED ART

Patent document 1 describes that "a monitoring system configured at multi-vendors... exchanges information on each other's equipment. The exchanged information uses, as an interface file, a file written in a CSV format in which the data is defined. Said file written in a CSV format is to be acquired from other companies, and also to be passed to other companies from its own company."

### Related Art Documents

### Patent Documents

Patent Document 1: Japanese Patent Application Publication No. 2009-295090
US 11,016,129 B1 provides voltage event tracking and classification. Group voltage attributes that are similar to known device class attributes are identified and extracted. Group voltage attributes that exhibit similar phase and harmonic signal profiles may be classified as likely arising from a device from a known device class.
US 2020/0271488 A1 provides a method, apparatus and computer program product for providing sensor data collection and sensor configuration. An apparatus may include means, such as a processor, for determining an error relating to the receipt of sensor data from a sensor.
US 2013/0201316 A1 provides a system and method for server based control. The controller, the control logic, or the system operation may be based on, or involves, a fussy control which is typically based on fuzzy logic. Fuzzy logic is able to process incomplete data and provide approximate solutions to problems other methods find difficult to solve.

### SUMMARY

The invention provides a data processing apparatus according to claim 1, a data processing method according to claim 12 and a data processing program according to claim 13.

A first aspect of the present invention provides a data processing apparatus. The above-described data processing apparatus may include a data acquisition unit configured to acquire sensor data of a sensor that is capable of measuring physical quantities of a measurement target. The above-described data processing apparatus may include an interpretation unit configured to attempt to interpret, in accordance with a definition for each field of the sensor data, sensor data in the respective fields. The above-described data processing apparatus may include an output unit configured to output the sensor data interpreted by the interpretation unit for a field of which a definition is known, and to output the sensor data acquired by the data acquisition unit as is for a field of which a definition is unknown along with an indicator indicating unidentified.

The above-described data processing apparatus may further include a confirming unit configured to later confirm a definition for at least one field among fields of which the definition is unknown.

The above-described data processing apparatus may further include an estimating unit configured to estimate a definition to be proposed for the at least one field.

The above-described output unit may further output the definition estimated by the estimating unit. In response to the definition estimated by the estimating unit being output, when a response indicating confirmation of the definition is received, the confirming unit may confirm a definition for the at least one field.

The estimating unit may estimate that a field having no variation in the sensor data is a field that represents an identifier that identifies the sensor.

The estimating unit may estimate that a field having a same value consecutively at either a beginning or an end of the sensor data is a field that represents padding.

The estimating unit may estimate that a field which increases along a time axis in the sensor data is a field that represents a time at which the sensor measured the physical quantities.

The estimating unit may estimate a field that decreases along a time axis in the sensor data is a field that represents a remaining battery amount of the sensor.

The estimating unit may estimate that a field having random variation in the sensor data is a field that represents the physical quantities measured by the sensor.

The estimating unit may estimate a type of the physical quantities measured by the sensor based on the varying characteristic.

The estimating unit may estimate a definition to be proposed for the at least one field based on a physical address of the sensor.

A second aspect of the present invention provides a data processing method. The data processing method may include acquiring sensor data of a sensor that is capable of measuring physical quantities of a measurement target. The data processing method may include attempting to interpret, in accordance with a definition for each field of the sensor data, sensor data in the respective fields. The data processing method may include outputting the sensor data interpreted in the attempting to interpret for a field of which a definition is known, and to output the sensor data acquired in the acquiring as is for a field of which a definition is unknown along with an indicator indicating unidentified.

A third aspect of the present invention provides a data processing program. The above-described data processing program may be executed by a computer. The data processing program may cause the computer to function as a data acquisition unit configured to acquire sensor data of a sensor that is capable of measuring physical quantities of a measurement target. The data processing program may cause the computer to function as an interpretation unit configured to attempt to interpret, in accordance with a definition for each field of the sensor data, sensor data in the respective fields. The data processing program may cause the computer to function as an output unit configured to output the sensor data interpreted by the interpretation unit for a field of which a definition is known, and to output the sensor data acquired by the data acquisition unit as is for a field of which a definition is unknown along with an indicator indicating unidentified.

The summary clause does not necessarily describe all necessary features of the embodiments of the present invention. The present invention may also be a sub-combination of the features described above.

### BRIEF DESCRIPTION OF THE DRAWINGS

Fig. 1 illustrates an example of a data processing system 10 in which the data processing apparatus 100 according to the present embodiment may be included.
Fig. 2 illustrates an example of target data 200 which is a collection target by the data processing system 10.
Fig. 3 illustrates an example of sensor data which is a processing target by the data processing apparatus 100 according to the present embodiment.
Fig. 4 illustrates an example of a block diagram of the data processing apparatus 100 according to the present embodiment.
Fig. 5 illustrates an example of a flow of the data processing apparatus 100 according to the present embodiment outputting the sensor data.
Fig. 6 illustrates an example of a flow of the data processing apparatus 100 according to the present embodiment later confirming a definition.
Fig. 7 illustrates an example of an output by the data processing apparatus 100 according to the present embodiment.
Fig. 8 illustrates an example of a computer 9900 in which a plurality of aspects of the present invention may be embodied entirely or in part.

### DESCRIPTION OF EXEMPLARY EMBODIMENTS

Hereinafter, the present invention will be described through embodiments of the invention, but the following embodiments do not limit the claimed invention. In addition, not all combinations of features described in the embodiments are essential to the solution of the invention.

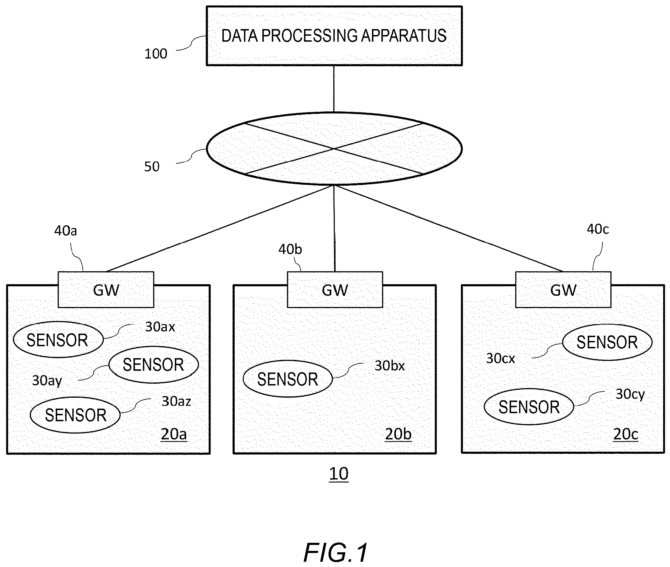

Fig. 1 illustrates an example of a data processing system 10 in which a data processing apparatus 100 according to the present embodiment may be included. In the data processing system 10, a sensor network that is constructed on equipment 20 is connected, via a communication network 50, to the data processing apparatus 100 according to the present embodiment and other various apparatuses (not shown).

The equipment 20 may be, for example, a factory, an office building, a commercial building, a hospital, a school, a store, a hotel, a road, a bridge, a tunnel, and the like. Hereinbelow, a case in which the equipment is a plant will be described as an example. Herein, in addition to an industrial plant such as a chemical or biological plant, the plant include a plant for managing and controlling a well source such as a gas field or an oil field and surroundings thereof, a plant for managing and controlling power generation such as hydraulic power generation, thermal power generation, nuclear power generation, a plant for managing and controlling energy harvesting such as solar photoelectric power generation or wind power generation, a plant for managing and controlling water supply and sewerage, dam or the like, and the like. A number of equipment such as field equipment, a pump, a tank, and the like exist in such plants. Accordingly, in the equipment 20, for the purpose of soundness diagnosis and failure sign diagnosis of these equipment, it is desirable to measure various physical quantities at various locations in the equipment 20.

Therefore, in such equipment 20, one or more sensors 30 and a gateway 40 are provided, which together construct a sensor network. In the present drawing, a case is shown as an example in which equipment 20a is provided with sensors 30ax to az and a gateway 40a, which together construct a sensor network a, equipment 20b is provided with a sensor 30bx and a gateway 40b, which together construct a sensor network b, and equipment 20c is provided with sensors 30cx to cy and a gateway 40c, which together construct a sensor network c. Here, the equipment 20a to 20c are collectively referred to as the equipment 20, the sensors 30ax to 30cy are collectively referred to as the sensor 30, and the gateways 40a to 40c are collectively referred to as the gateway 40.

The sensor 30 is capable of measuring physical quantities of a measurement target. The sensor 30 may be, for example, an IoT (Internet of Things) sensor, and as an example, may be an IIoT (Industrial IoT) sensor that targets the industrial field such as manufacturing, transportation, and distribution. However, it is not limited thereto. The sensor 30 may be an OT (Operational Technology) sensor (for example, a sensor for process control (measurement)) that is installed in an OT region, or the like.

The sensor 30 measures, for example, physical quantities such as the temperature, the pressure, and the mass flow rate in the equipment 20. The sensor 30 transmits the sensor data including the measurement data to the gateway 40 along with its own identification information.

The gateway 40 is network equipment that connects different networks to each other. The gateway 40 relays communication between the sensor network constructed in the equipment 20 in which itself is provided and the communication network 50, for example. In a case where identification information of the sensor 30 and the sensor data are acquired from the sensor 30, the gateway 40 supplies, for example, to the communication network 50, data to which a header, its own identification information, and a timestamp are added.

The communication network 50 is a network that connects a plurality of computers. The communication network 50 may be, for example, a global network through which a plurality of computer networks are interconnected, and as an example, may the Internet or the like that uses the Internet protocol.

In this manner, the data processing system 10 can collect data sensed by the plurality of sensors 30 from the plurality of equipment 20 via the gateway 40.

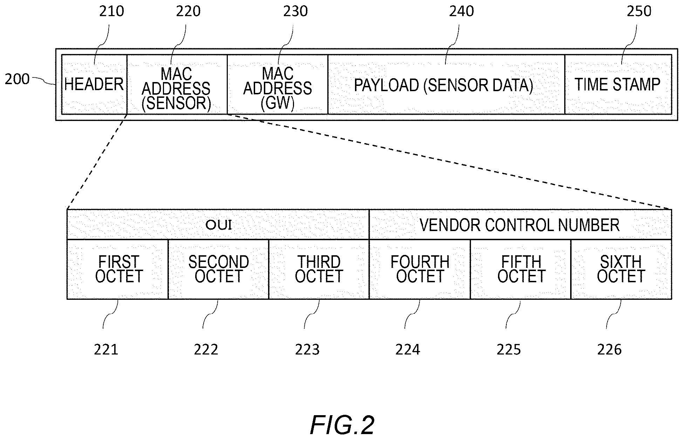

Fig. 2 illustrates an example of target data 200 which is a collection target by the data processing system 10. Such target data 200 is represented in a CSV (Comma Separated Value) format, for example, and includes a plurality of fields (in the present drawing,a first field 210 to a fifth field 250) that are partitioned with a comma.

The first field 210 represents a header. The second field 220 represents a MAC (Media Access Control) address of the sensor 30. The third field 230 represents a MAC address of the gateway 40. The fourth field 240 represents a payload. The fifth field 250 represents a timestamp added by the gateway 40.

Herein, the MAC address is a physical address consisting of a unique identification code for each individual that is physically recorded at the time of manufacture in order to uniquely identify or distinguish the equipment from other individuals over an IP network such as the Internet.

In general, the MAC address is a address with a length of 48 bits, which is represented by using hexadecimal. The MAC address is partitioned with six octets including a first octet 221 to the sixth octet 226, in a manner like 01:23:45:67:89:AB or FE:DC:BA:98:76:54, for example.

Here, the first octet 221, the second octet 222, and the third octet 223 are called an OUI (Organizationally Unique Identifier), and represent an ID of the vendor who manufactured the equipment. In addition, the fourth octet 224, the fifth octet 225, and the sixth octet 226 represent a vendor control number that is a unique code that is numbered within the vendor. Generally, in more detail, the fourth octet 224 represents an equipment type ID, and the fifth octet and the sixth octet represent a serial ID.

In such target data 200, the sensor data of the sensor 30 is included inside a payload which is the fourth field 240. However, as mentioned above, the sensor data is represented by using a unique format for each vendor.

Recently, in addition to the temperature, the pressure, the mass flow rate and the like in the equipment 20, it is desired to measure various physical quantities such as the humidity, brightness, acceleration, magnetic field, images, sounds, and the like. However, it is difficult for one vendor to provide various types of such sensors. Accordingly, the various sensors manufactured by a plurality of vendors may be mixed in the sensor 30 from which the data processing system 10 collects the sensor data. In such a multi-vendored data processing system 10, the collected sensor data is represented by using a unique format for each vendor. Note that, a format herein means a format in which the data is written, such as in what order, for how much length, and in what kind of representation (integers, character strings or the like) the elements included in a certain data is to be written. In this case, it is preferable to know in advance what kind of format is used for all the sensors 30 that are targeted. However, since uncountable sensors 30 that are manufactured by a plurality of vendors exist in equipment 20 such as a plant, as mentioned above, for example, it is time-consuming and difficult to prepare the formats for each of all the sensors 30 in advance.

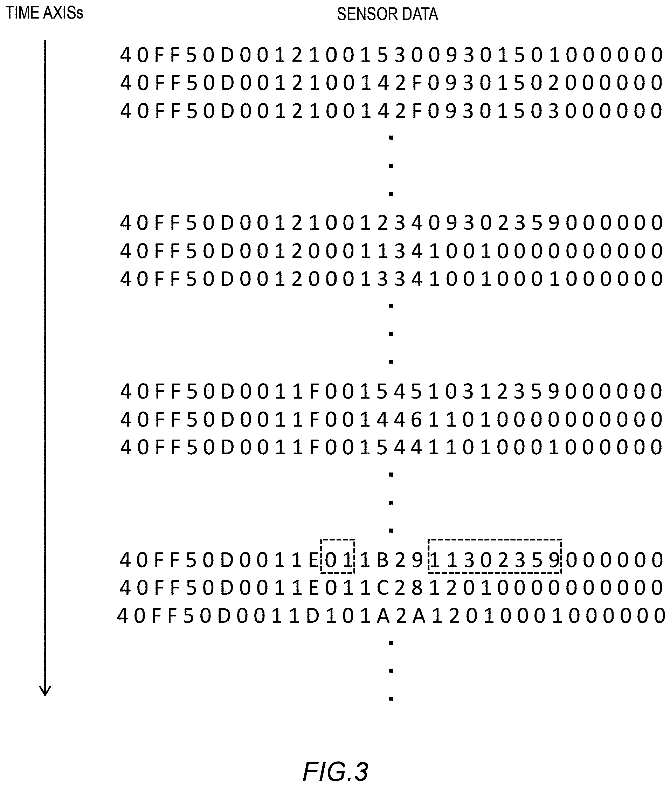

Fig. 3 illustrates an example of sensor data which is a processing target by the data processing apparatus 100 according to the present embodiment. The data processing apparatus 100 acquires the sensor data for each sensor 30 in a time series manner from the target data 200 that is the collection target of the data processing system 10. Assume that the data processing system 10 acquires 32-digit sensor data in a time series manner, as illustrated in the present drawing, for example. In this case, if a format of the acquired sensor data is prepared in advance, since the definition of each field is known, it is possible to interpret what each digit is representing. However, in a case where a format for the acquired sensor data is not prepared in advance, since the definition of each field is unknown, it is impossible to interpret what each digit is representing. Note that, here, the field means a small element of data that constitutes a large set, and here, it means an element of each data which constitutes the sensor data. For example, in a case where the acquired sensor data includes temperature data and humidity data as measurement data, it is impossible to understand in what order they are written, or the length in which each of the data are written, or with what kind of representation each of the data are written, or the like, and thus, it is impossible to interpret which digit represents the temperature data or which digit represents the humidity data.

The data processing apparatus 100 according to the present embodiment attempts to interpret the sensor data in each field by first fetching the sensor data, instead of rejecting fetching of the sensor data, even in a case where the format for the sensor data is not prepared in advance, as described above. The data processing apparatus 100 according to the present embodiment then outputs the interpreted sensor data for the fields of which the definition is known, while outputting the sensor data as fetched for the fields of which the definition is unknown along with an indicator indicating unidentified. That is, the data processing apparatus 100 according to the present embodiment outputs the fetched sensor data as is for the fields of which the definition is unknown along with an indicator indicating unidentified, even if the definition of all the fields in the sensor data cannot be interpreted. In this way, with the data processing apparatus 100 according to the present embodiment, even in a case where the format of the sensor data is not prepared in advance, the sensor data is first fetched, so that the user can be notified of the fact that the sensor data in which field could be interpreted and the sensor data in which field could not be interpreted. This will be described in detail.

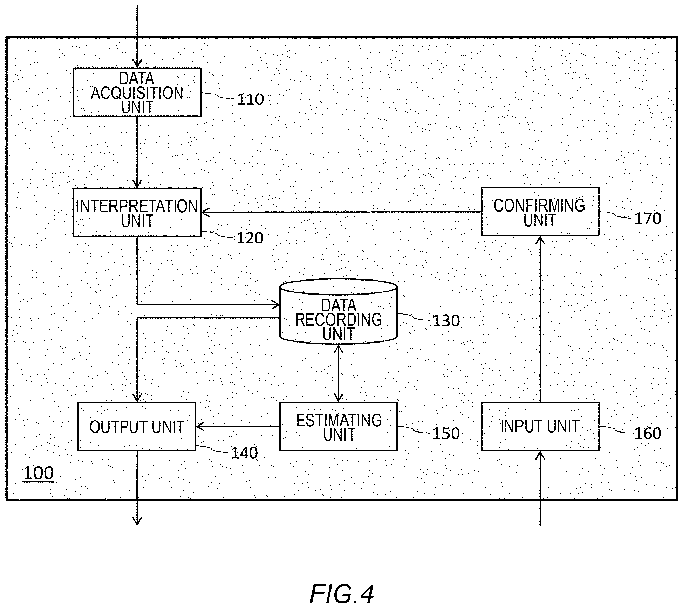

Fig. 4 illustrates an example of a block diagram of the data processing apparatus 100 according to the present embodiment. The data processing apparatus 100 according to the present embodiment may be a computer such as a PC (personal computer), a tablet computer, a smartphone, a work station, a server computer, or a general purpose computer, or may be a computer system through which a plurality of computers are connected. Such a computer system is also a computer in a broad sense. In addition the data processing apparatus 100 may be implemented by one or more virtual computer environment that can run in the computer. Alternatively, the data processing apparatus 100 may be a dedicated computer designed for data processing, or may be a dedicated hardware achieved by a dedicated circuitry. In addition, in a case where the data processing apparatus 100 can connect to the Internet, the data processing apparatus 100 may be achieved through cloud computing.

The data processing apparatus 100 includes a data acquisition unit 110, an interpretation unit 120, a data recording unit 130, an output unit 140, an estimating unit 150, an input unit 160, and a confirming unit 170. Note that, these blocks are functional blocks that are each functionally divided, and are not necessarily required to be matched with actual device configuration. That is, one block shown in the present drawing is not necessarily required to be configured by one device. In addition, separate blocks shown in the present drawing are not necessarily required to be configured by separate devices.

The data acquisition unit 110 acquires the sensor data of the sensor 30 that is capable of measuring the physical quantities of the measurement target. For example, the data acquisition unit 110 acquires the target data 200 including sensor data of the sensor 30 and a MAC address of said sensor 30. The data acquisition unit 110 supplies the acquired sensor data to the interpretation unit 120 along with the MAC address of the sensor 30.

The interpretation unit 120 attempts to interpret, in accordance with a definition for each field of the sensor data, the sensor data in the respective fields. For example, the interpretation unit 120 attempts to interpret, in accordance with a definition for each field of the sensor data acquired by the data acquisition unit 110, sensor data in the respective fields. In a case where there is a field for which the definition is known, the interpretation unit 120 then performs interpretation in accordance with the definition of the sensor data in said field. On the other hand, in a case where there is a field for which the definition is unknown, without interpreting the sensor data in said field, the interpretation unit 120 provides said sensor data with an indicator indicating unidentified. Note that, such a definition may be those confirmed by the user in advance when introducing the data processing apparatus 100 according to the present embodiment, for example, or may be those later confirmed during operation of the data processing apparatus 100 according to the present embodiment. The interpretation unit 120 supplies the interpreted sensor data or the sensor data provided with the indicator to the data recording unit 130 along with the MAC address of the sensor 30.

The data recording unit 130 records the sensor data. For example, the data recording unit 130 records, for each sensor 30, the sensor data interpreted or provided with the indicator by the interpretation unit 120 in association with the MAC address in a time series manner.

The output unit 140 outputs the sensor data recorded in the data recording unit 130. At this time, the output unit 140 outputs the interpreted sensor data for the field of which the definition is known, and output the acquired sensor data as is for the field of which the definition is unknown along with an indicator indicating unidentified.

The estimating unit 150 estimates the definition to be proposed for at least one field. For example, the estimating unit 150 analyzes the sensor data recorded in the data recording unit 130, and estimates the definition to be proposed for at least one field of which the definition is unknown. The estimating unit 150 supplies the estimated definition to the output unit 140. In response, the output unit further 140 outputs said estimated definition. This will be described later.

The input unit 160 accepts an input. For example, the input unit 160 accepts a user input or a message from other apparatuses. The input unit 160 supplies the input information to the confirming unit 170.

The confirming unit 170 later confirms the definition for at least one field in the fields of which the definition is unknown. For example, in response to a definition estimated by the estimating unit 150 being output by the output unit 140, in a case where a response indicating confirmation of said definition is obtained via the input unit 160, the confirming unit 170 confirms the definition for at least one field. The confirming unit 170 supplies the confirmed definition to the interpretation unit 120. In response, the interpretation unit 120 interprets, in accordance with said definition, the sensor data in the field of which the definition has been confirmed. The data recording unit 130 then updates the recorded sensor data, and the output unit 140 outputs the updated sensor data.

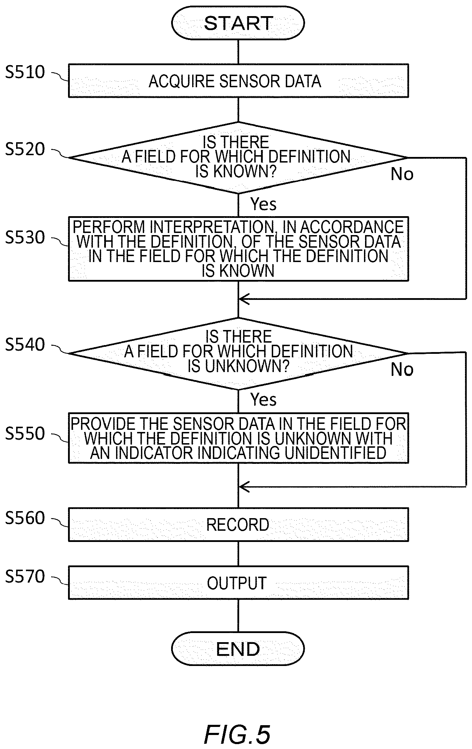

Fig. 5 illustrates an example of a flow of the data processing apparatus 100 according to the present embodiment outputting the sensor data.

At step S510, the data processing apparatus 100 acquires sensor data. For example, the data acquisition unit 110 acquires target data 200 including sensor data of the sensor 30 that is capable of measuring physical quantities of a measurement target and a MAC address of said sensor 30 from equipment 20 via a communication network 50. However, it is not limited thereto. The data acquisition unit 110 may acquire the sensor data via a user input, or may acquire the sensor data by reading from various memory devices. The data acquisition unit 110 supplies the acquired sensor data to the interpretation unit 120 along with the MAC address of the sensor 30.

At step S520, the data processing apparatus 100 determines whether there is a field for which the definition is known. For example, the interpretation unit 120 determines whether there is a field for which the definition is known (the definition is confirmed) in the sensor data acquired at step S510. In a case where it is determined that there is a field for which the definition is known (Yes), the data processing apparatus 100 advances the process to step S530.

At step S530, the data processing apparatus 100 interprets, in accordance with the definition, the sensor data in the field for which the definition is known. For example, the interpretation unit 120 interprets, in accordance with the definition, the sensor data in a field of which the definition is determined to be known at step S520. As an example, in a case where it is known that the 19^{th} to 26^{th} digit field in the sensor data shown in Fig. 3 represent the measurement date and time in the order of month, date, hour, minute, for example, the interpretation unit 120 interprets a data string in said field "11302359" as "November 30^{th}, 23:59" in accordance with the definition.

On the other hand, in a case where it is determined that there is no field for shich the definition is known at step S520 (No), the data processing apparatus 100 advances the process to step S540.

At step S540, the data processing apparatus 100 determines whether there is a field for which a definition is unknown. For example, the interpretation unit 120 determines whether there is a field for which the definition is unknown (the definition is unconfirmed) in the sensor data acquired at step S510. In a case where it is determined that there is a field for which the definition is unknown (Yes), the data processing apparatus 100 advances the process to step S550.

At step S550, the data processing apparatus 100 provides the sensor data in a field for which the definition is unknown with an indicator indicating unidentified. For example, the interpretation unit 120 provides the sensor data in a field for which the definition is determined to be unknown at step S540 with an indicator indicating unidentified. As an example, in a case where the definition for the 13^{th} to 14^{th} digit field in the sensor data shown in Fig. 3 is unknown, the interpretation unit 120 provides the data string "01" in said field with an indicator "UNK (Unknown)" indicating unidentified, for example.

On the other hand, in a case where it is determined that there is no field of which the definition is unknown at step S540 (No), the data processing apparatus 100 advances the process to step S560. In this manner, the interpretation unit 120 attempts to interpret, in accordance with the definition for each field of the sensor data acquired at step S510, the sensor data in respective fields. The interpretation unit 120 supplies the sensor data interpreted at step S530 or provided with an indicator at step S550 to the data recording unit 130 along with the MAC address of the sensor 30.

At step S560, the data processing apparatus 100 records the sensor data. For example, the data recording unit 130 records, for each sensor 30, the sensor data interpreted at step S530 or provided with the indicator at step S550 in association with the MAC address in a time series manner.

At step S570, the data processing apparatus 100 outputs the sensor data. For example, the output unit 140 accesses the data recording unit 130, and outputs the sensor data recorded at step S570 by displaying the same on a monitor. However, it is not limited thereto. The output unit 140 may output the sensor data by voice reading, may output the sensor data by printing it out, or may output the sensor data by transmitting a message to other apparatuses or functional units. At this time, the output unit 140 outputs the interpreted sensor data for the field of which the definition is known, and output the acquired sensor data as is for the field of which the definition is unknown along with an indicator indicating unidentified. That is, in a case where the definition for the 19^{th} to 26^{th} digit field is known, for example, for said field, the output unit 140 may interpret the data string "11302359" in said field as "November 30^{th}, 23:59" in accordance with the definition and output the same. In addition, in a case where the definition for the 13^{th} to 14^{th} digit field is unknown, for example, for said field, the output unit 140 may output the data string "01" in said field as is, along with an indicator "UNK (Unknown)" indicating unidentified.

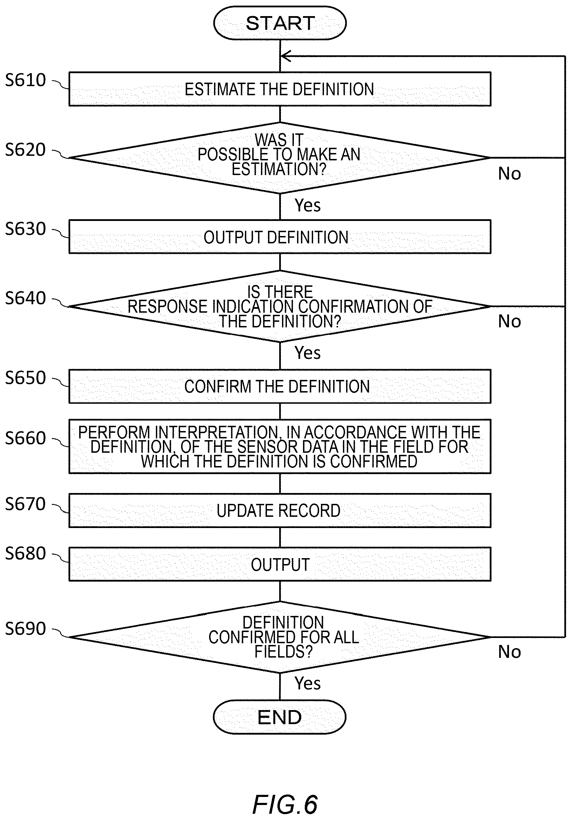

Fig. 6 illustrates an example of a flow of the data processing apparatus 100 according to the present embodiment later confirming a definition.

At step S610, the data processing apparatus 100 estimates a definition to be proposed. For example, the estimating unit 150 analyzes the sensor data recorded in a time series manner according to the flow in Fig. 5, and estimates a definition to be proposed for at least one field of which the definition is unknown. Some examples will be illustrated for this.

For example, assume that a data string with the 1^{st} to 10^{th} digit field in the sensor data did not vary from "40FF50D001". In this case, said field is likely to represent some kind of identifier that identifies the sensor 30. Accordingly, the estimating unit 150 may estimate that the field having no variation in the sensor data as a field that represents an identifier that identifies the sensor 30.

In addition, for example, assume that a data string in the 27^{th} to 32^{nd} digit field in the sensor data is "000000". Here, in general, there are cases where padding is performed in which meaningless data such as "0" or "1" is consecutively added to either the beginning or the end of the data when it is desired to handle a fixed-length data. Accordingly, the estimating unit 150 may estimate that a field having a same value consecutively at either a beginning or an end of the sensor data in such manner is a field that represents padding.

In addition, for example, assume that the data string in the 19^{th} to 26^{th} digit field in the sensor data increased along the time axis, such as "11302359", "12010000", "12010001". In this case, said field is likely to represent the time at which the sensor 30 measured the physical quantities. In addition, in a case where when the 25^{th} digit to 26^{th} digit varies from "59" to "00", the 23^{rd} digit to 24^{th} digit varies from "23" to "00", it is likely that the 25^{th} digit to 26^{th} digit represents the "minute", and the 23^{rd} digit to 24^{th} digit represents the "hour". In addition, in a case where when the 23^{rd} digit to the 26^{th} digit varies from "2359" to "0000", the 19^{th} digit to the 22^{nd} digit varies from "1130" to "1201", it is likely that the 21^{st} digit to the 22^{nd} digit represents the "date", and the 19^{th} digit to the 20^{th} digit represents the "month". Accordingly, the estimating unit 150 may estimate that a field in which the sensor data increases along the time axis in such manner is a field that represents the time (including date, time, date and time, and the like) at which the sensor 30 measured the physical quantities.

In addition, for example, assume that a data string in the field of the 11^{th} digit to 12^{th} digit in the sensor data decreased along the time axis, such as "21", "20", "1F", "1E", "1D". In addition, "21" which is represented in hexadecimal is converted into decimal numbers as follows: 0 x 21 = 33. That is, assume that the value represented by said field decreases from "33" along the time axis. This is similar to the behavior of the remaining amount of a "3.3V" battery decreasing along time, for example. Accordingly, the estimating unit 150 may estimate that a field that decreases along a time axis in the sensor data is a field that represents a remaining battery amount of the sensor 30.

In addition, assume, for example, that a data string in a field of the 15^{th} digit to the 18^{th} digit in the sensor data randomly varied, such as "1530", "142F", "1234", "1134". In this case, said field is likely to represent physical quantities measured by the sensor 30. Accordingly, the estimating unit 150 may estimate that a field having random variation in the sensor data is a field that represents the physical quantities measured by the sensor 30.

In addition, assume that the sensor 30 is known to be a sensor 30 that measures two type os physical quantities including temperature and humidity. In this case, dividing the 15^{th} to 18^{th} digits into two parts, namely into the 15^{th} to 16^{th} digits and the 17^{th} to 18^{th} digits, it could be assumed that the 15^{th} to 16^{th} digits varied between "11" (minimum value" and "1c" (maximum value), and the 17^{th} to 18^{th} digits varied between "28" and "46". Here, 0 x 11 = 17, and 0 x 1c =28. That is, it is assumed that the value represented by the 15^{th} to 16^{th} digits varied between "17" and "28". It appears that this is related to the target temperature of 17 to 28 degrees (range) at the equipment 20, for example. Similarly, 0 x 28 = 40, and 0 x 46 = 70. That is, it is assumed that the value represented by the 17^{th} to 18^{th} digits varied between "40" and "70". It appears that this is related to the target humidity of 40 to 70% at the equipment 20, for example. Accordingly, the estimating unit 150 can estimate that the 15^{th} to 16^{th} digits represent the temperature, and the 17^{th} to 18^{th} digits represent the humidity. The estimating unit 150 may estimate the type of physical quantities measured by the sensor 30, based on the varying characteristic in this way (for example, range, mean, median, maximum value, minimum value and the like).

The estimating unit 150 can estimate a definition to be proposed for at least one field of which the definition is unknown, by analyzing the sensor data recorded in a time series manner in this way, for example.

At step S620, the data processing apparatus 100 determines whether it was possible to estimate the definition for at least one field. In a case where it is determined that it was not possible to perform the estimation (No), the data processing apparatus 100 continues the flow by returning the process to step S610. On the other hand, in a case where it is determined that it was possible to perform the estimation (Yes), the estimating unit 150 supplies the definition estimated at step S610 to the output unit 140. The data processing apparatus 100 then advances the process to step S630.

At step S630, the data processing apparatus 100 outputs the estimated definition. For example, the output unit 140 outputs the definition estimated at step S610 by displaying the same on a monitor. At this time, the output unit 140 may together display a button indicating confirmation of the output definition.

At step S640, the data processing apparatus 100 determines whether a response indicating confirmation of the definition has been obtained. For example, the input unit 160 determines whether a response indicating confirmation of the definition from whether the button indicating confirmation of the definition has been pressed. In a case where it is determined that a response indicating confirmation of the definition has not been obtained (No), the data processing apparatus 100 continues the flow by returning the process to step S610. On the other hand, in a case where it is determined that a response indicating confirmation of the definition has been obtained (Yes), the input unit 160 supplies information indicating the same to the confirming unit 170. The data processing apparatus 100 then advances the process to step S650.

At step S650, the data processing apparatus 100 confirms the definition. For example, in response to the definition estimated at step S610 being output at step S630, in a case where a response indicating confirmation of said definition is obtained at step S640, the confirming unit 170 confirms the definition for at least one field. In this manner, the confirming unit 170 later confirms the definition for at least one field in fields of which the definition is unknown. The confirming unit 170 supplies the confirmed definition to the interpretation unit 120.

At step S660, the data processing apparatus 100 interprets, in accordance with the definition, the sensor data in a field of which the definition is confirmed. For example, the interpretation unit 120 interprets the sensor data in a field for which the definition has been confirmed at step S650, in accordance with said definition. The interpretation unit 120 supplies the sensor data interpreted at step S530 to the data recording unit 130 along with the MAC address of the sensor 30.

At step S670, the data processing apparatus 100 updates the record. For example, the data recording unit 130 overwrites the sensor data that had been recorded as the data string itself along with an indicator "UNK" indicating unidentified to the sensor data interpreted at step S660.

At step S680, the data processing apparatus 100 outputs the sensor data. For example, the output unit 140 accesses the data recording unit 130, and outputs the sensor data updated at step S670 by displaying the same on a monitor.

At step S690, the data processing apparatus 100 determines whether the definition has been confirmed for all the fields in the sensor data. In a case where it is determined that the definition for all the field has been confirmed (Yes), the data processing apparatus 100 ends the flow. On the other hand, in a case where it is determined that the definition has not been confirmed for all the fields (No), the data processing apparatus 100 continues the flow by returning the process to step S610.

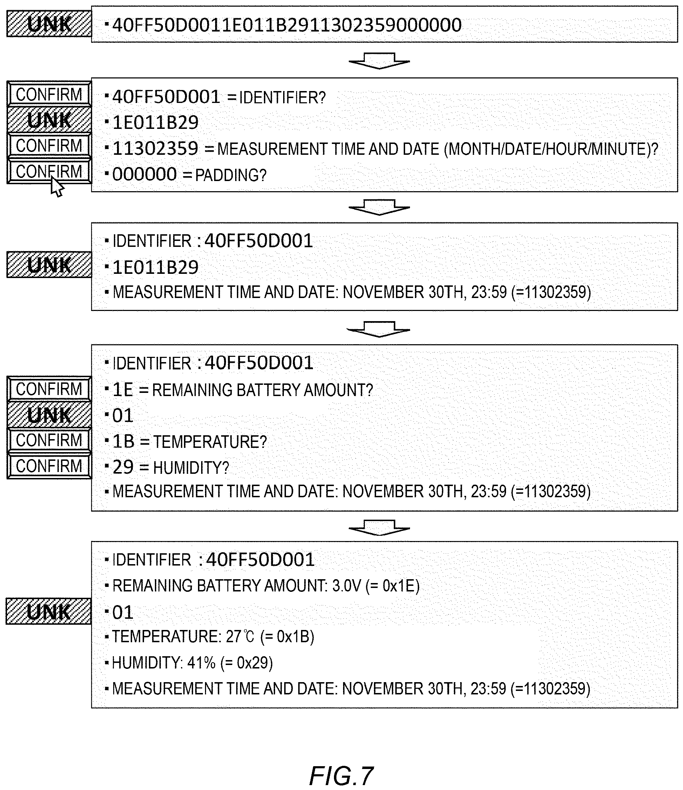

Fig. 7 illustrates an example of an output by the data processing apparatus 100 according to the present embodiment. Assume, for example, that the data processing apparatus 100 acquired a 32-digit data string "40FF50D0011E011B2911302359000000" as the sensor data. Here, in a case where the definition is unknown for any of the fields in said sensor data, the data processing apparatus 100 displays the sensor data in all the fields by the data string itself, along with an indicator "UNK (Unknown)" indicating unidentified.

Here, assume that the data processing apparatus 100 estimated that the 1^{st} to 10^{th} digit field in the sensor data is a field representing an identifier that identifies the sensor 30, by analyzing the sensor data recorded in a time series manner. In this case, the data processing apparatus 100 makes a proposal by displaying the estimated definition, such as "40FF50D001 = identifier?", for example. At this time, the data processing apparatus 100 may together display a button indicating confirmation of the proposed definition, such as "confirm".

Similarly, assume that the data processing apparatus 100 estimated that the 19^{th} to 26^{th} digit field of in the sensor data is a field that represents the date and time at which sensor 30 measured the physical quantities, in a month/date/hour/minute format. In this case, the data processing apparatus 100 displays "11302359 = measurement date and time (month/date/hour/minute)?", along with a "confirm" button, for example.

Similarly, assume that the data processing apparatus 100 estimated that the 27^{th} to 32^{nd} digit field in the sensor data is a field that represents padding. In this case, the data processing apparatus 100 displays "000000 = padding?", along with a "confirm" button, for example.

On the other hand, assume that the data processing apparatus 100 cannot estimate the definition for the 11^{th} to 18^{th} digit field in the sensor data, and that the definition is still unknown. In this case, the data processing apparatus 100 displays "1E011B29" along with an indicator "UNK".

Here, assume that the "confirm" button is pressed by the user for all of the 1^{st} to 10^{th} digit field, the 19^{th} to 26^{th} digit field, and the 27^{th} to 32^{nd} digit field in the sensor data. In response, the data processing apparatus 100 confirms that the definition for the 1^{st} to 10^{th} digit field in the sensor data is a field that represents an identifier, and updates said field to sensor data having been interpreted in accordance with the definition, such as from the data string to "identifier: 40FF50D001". Similarly, the data processing apparatus 100 confirms that the definition for the 19^{th} to 26^{th} digit field in the sensor data is a field that represents the measurement date and time as in a month/date/hour/minute format, and updates said field to sensor data having been interpreted in accordance with the definition, such as from the data string to "measurement date and time: November 30^{th}, 23:59". Similarly, the data processing apparatus 100 confirms that the definition for the 27^{th} to 32^{nd} digit field in the sensor data is a field that represents padding, and updates said field to sensor data having been interpreted in accordance with the definition by deleting the data string in said field.

In addition, assume that the data processing apparatus 100 estimated that the 11^{th} to 12^{th} digit field in the sensor data is a field that represents the remaining battery amount of the sensor 30. In this case, the data processing apparatus 100 displays "1E = remaining battery amount?", along with a "confirm" button, for example. Similarly, assume that the data processing apparatus 100 estimated that the 15^{th} to 16^{th} digit field in the sensor data is a field that represents the temperature measured by the sensor 30. In this case, the data processing apparatus 100 displays "1B = temperature?", along with a "confirm" button. Similarly, assume that the data processing apparatus 100 estimated that the 17^{th} to 18^{th} digit field in the sensor data is a field that represents the humidity measured by the sensor 30. In this case, the data processing apparatus 100 displays "29 = humidity?", along with a "confirm" button.

On the other hand, assume that the data processing apparatus 100 cannot estimate the definition for the 13^{th} to 14^{th} digit field in the sensor data, and that the definition is still unknown. In this case, the data processing apparatus 100 displays "01" along with an indicator "UNK".

Here, assume that the "confirm" button is pressed by the user for all of the 11^{th} to 12^{th} digit field, the 15^{th} to 16^{th} digit field, and the 17^{th} to 18^{th} digit field in the sensor data. In response, the data processing apparatus 100 confirms that the definition for the 11^{th} to 12^{th} digit field in the sensor data is a field that represents the remaining battery amount, and updates said field to sensor data having been interpreted in accordance with the definition, such as from the data string to "remaining battery amount: 3.0 V (= 0x1E)". Similarly, the data processing apparatus 100 confirms that the definition for the 15^{th} to 16^{th} digit field in the sensor data is a field that represents the temperature, and updates said field to sensor data having been interpreted in accordance with the definition, such as from the data string to "temperature: 27 degrees celsius (= 0x1B)". Similarly, the data processing apparatus 100 confirms that the definition for the 17^{th} to 18^{th} digit field in the sensor data is a field that represents the humidity, and updates said field to sensor data having been interpreted in accordance with the definition, such as from the data string to "humidity: 41 % (= 0x29)".

In this manner, the data processing apparatus 100 according to the present embodiment attempts to interpret the sensor data in each field by first fetching the sensor data, instead of rejecting fetching of the sensor data, even in a case where the format for the sensor data is not prepared in advance. The data processing apparatus 100 according to the present embodiment then outputs the interpreted sensor data for the fields of which the definition is known, while output the sensor data as fetched for the fields of which the definition is unknown along with an indicator indicating unidentified. That is, the data processing apparatus 100 according to the present embodiment outputs the fetched sensor data as is for the fields of which the definition is unknown along with an indicator indicating unidentified, even if the definition of all the fields in the sensor data cannot be interpreted. In this way, with the data processing apparatus 100 according to the present embodiment, even in a case where the format of the sensor data is not prepared in advance, the sensor data is first fetched, so that the user can be notified of the fact that the sensor data in which field could be interpreted and the sensor data in which field could not be interpreted.

In addition, the data processing apparatus 100 according to the present embodiment later confirms the definition for at least one field in the fields of which the definition is unknown. In this way, with the data processing apparatus 100 according to the present embodiment, even when there is a field of which the definition is unknown at the time the sensor data is acquired, the sensor data can be first fetched, and the definition can be added later.

In addition, the data processing apparatus 100 according to the present embodiment estimates the definition to be proposed, and outputs the estimated definition. In this way, with the data processing apparatus 100 according to the present embodiment, the user can be notified of a definition that can be estimated by analyzing the sensor data.

In addition, the data processing apparatus 100 according to the present embodiment confirms the definition when a response indicating confirmation of the definition is obtained in response to the estimated definition being output. In this way, with the data processing apparatus 100 according to the present embodiment, instead of immediately confirming the estimated definition, the estimated definition can be confirmed after the user's consent is obtained.

At this time, the data processing apparatus 100 according to the present embodiment is capable of estimating the definition for various fields, such as the identifier, padding, the measurement time, the remaining battery amount, the physical quantities, and the types of physical quantities by analyzing the characteristics of each field in the sensor data.

Note that, in the description mentioned above, a case where the definition of a field is estimated by analyzing the characteristics of each field in the sensor data by the data processing apparatus 100 has been illustrated as an example. However, it is not limited thereto. The data processing apparatus 100 may take into consideration the physical address of the sensor 30 upon estimating the definition of a field.

As mentioned above, a MAC address is assigned to the sensor 30 as a physical address consisting of a unique identification code for each individual that is physically recorded at the time of manufacture in order to uniquely identify or distinguish the equipment from other individuals. Therefore, by investigating the top three octets (the first octet 221, the second octet 222, and the third octet 223) of such an MAC address, it is possible to identify the vendor. That is, it is possible to identify which vendor the sensor 30 is manufactured by. In addition, by investigating up to the fourth octet 224, it is also possible to identify the equipment type ID. That is, it is possible to identify which equipment manufactured by which vendor the sensor 30 is.

Therefore, the estimating unit 150 may estimate the definition to be proposed for at least one field based on the physical address of the sensor 30. For example, the estimating unit 150 may extract the top three octets of the MAC address of the targeted sensor 30. The estimating unit 150 then accesses the data recording unit 130, and searches for sensor data of another sensor having the top three octets in common (that is, another sensor manufactured by the same vendor as the targeted sensor 30), the sensor data for which the definition of the field being confirmed. In a case where such sensor data is found, under the estimation that the definition for each field should be the same in the sensor data of the targeted sensor 30 and the sensor data of the sensor that has been found, the estimating unit 150 may estimate a same definition as the sensor data of the sensor that has been found as the definition to be proposed for each field in the sensor data of the targeted sensor 30.

Note that, although a case where the definition is estimated by the data processing apparatus 100 based on the top three octets of the MAC address has been illustrated as an example in the description mentioned above, it is not limited thereto. For example, the data processing apparatus 100 may estimate the definition based on the top four octets of the MAC address. As an example, in a case where a plurality of other sensors having the top three octets of the MAC address, that is, the OUI in common is found, the estimating unit 150 may search for sensor data of another sensor having up to the fourth octet in common (that is, another sensor that is manufactured by the same vendor as the targeted sensor 30, and has the same equipment ID), the sensor data for which the definition of the field being confirmed. In a case where such sensor data is found, under the estimation that the definition for each field should be the same in the sensor data of the targeted sensor 30 and the sensor data of the sensor that has been found, the estimating unit 150 may estimate a same definition as the sensor data of the sensor that has been found as the definition to be proposed for each field in the sensor data of the targeted sensor 30. For example, this may be valid when sensors are manufactured by the same vendor, but the definition is different for sensors having different equipment IDs. The data processing apparatus 100 may estimate the definition to be proposed for at least one field based on the physical address of the sensor 30 in this manner.

Various embodiments of the present invention may be described with reference to flowcharts and block diagrams whose blocks may represent (1) steps of processes in which operations are executed or (2) sections of apparatuses responsible for executing operations. Certain steps and sections may be implemented by dedicated circuitry, programmable circuitry supplied with computer-readable instructions stored on computer-readable media, and/or processors supplied with computer-readable instructions stored on computer-readable media. The dedicated circuitry may include a digital and/or analog hardware circuit, or may include an integrated circuit (IC) and/or a discrete circuit. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

Computer-readable media may include any tangible device that can store instructions to be executed by a suitable device, and as a result, the computer-readable medium having instructions to be stored in the device comprise an article of manufacture including instructions that can be executed to provide means for performing operations specified in the flowcharts or block diagrams. Examples of the computer-readable media may include an electronic storage medium, a magnetic storage medium, an optical storage medium, an electromagnetic storage medium, a semiconductor storage medium, and the like. More specific examples of computer-readable media may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a BLU-RAY (registered trademark) disk, a memory stick, an integrated circuit card, and the like.

Computer-readable instructions may include assembler instructions, instruction-set-architecture (ISA) instructions, machine instructions, machine dependent instructions, microcode, firmware instructions, state-setting data, or either source code or object code described in any combination of one or more programming languages, including an object oriented programming language such as Smalltalk (registered trademark), JAVA (registered trademark) and C++, and a conventional procedural programming language such as a 'C' programming language or similar programming languages.

Computer-readable instructions may be provided to a processor of a general purpose computer, a special purpose computer, or other programmable data processing apparatus, or to programmable circuitry, locally or via a local area network (LAN), wide area network (WAN) such as the Internet, and the like, and the computer-readable instructions may be executed so as to provide means for performing operations specified in the flowcharts or block diagrams. Examples of the processor include a computer processor, a processing unit, a microprocessor, a digital signal processor, a controller, a microcontroller, and the like.

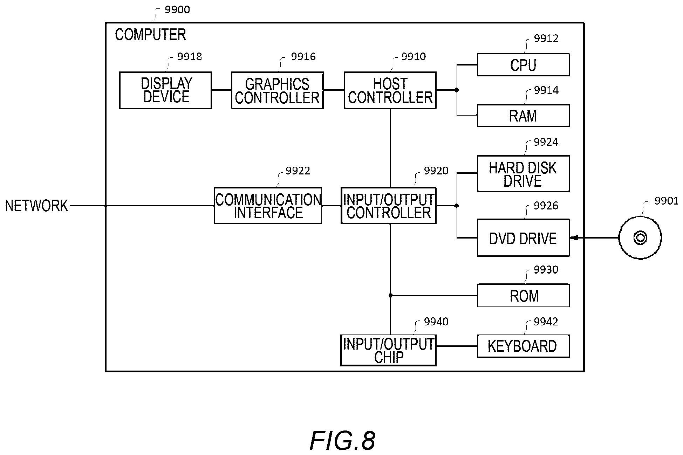

Fig. 8 illustrates an example of a computer 9900 in which a plurality of aspects of the present invention may be entirely or partially embodied. A program that is installed in the computer 9900 can cause the computer 9900 to function as or execute operations associated with the apparatus of the embodiment of the present invention or one or more sections of the apparatus, and/or cause the computer 9900 to execute the processes of the embodiment of the present invention or steps thereof. Such a program may be executed by a CPU 9912 so as to cause the computer 9900 to execute certain operations associated with some or all of the flowcharts and the blocks in the block diagrams described herein.

The computer 9900 according to the present embodiment includes the CPU 9912, a RAM 9914, a graphics controller 9916 and a display device 9918, which are mutually connected by a host controller 9910. The computer 9900 further includes input/output units such as a communication interface 9922, a hard disk drive 9924, a DVD drive 9926 and an IC card drive, which are connected to the host controller 9910 via an input/output controller 9920. The computer also includes legacy input/output units such as a ROM 9930 and a keyboard 9942, which are connected to the input/output controller 9920 via an input/output chip 9940.

The CPU 9912 is configured to operate according to programs stored in the ROM 9930 and the RAM 9914, thereby controlling each unit. The graphics controller 9916 is configured to acquire image data generated by the CPU 9912 on a frame buffer or the like provided in the RAM 9914 or in itself, and to cause the image data to be displayed on the display device 9918.

The communication interface 9922 is configured to communicate with other electronic devices via a network. The hard disk drive 9924 is configured to store programs and data that are used by the CPU 9912 within the computer 9900. The DVD drive 9926 is configured to read programs or data from a DVD-ROM 9901, and to provide the hard disk drive 9924 with the programs or data via the RAM 9914. The IC card drive is configured to read programs and data from an IC card, and/or to write programs and data into the IC card.

The ROM 9930 is configured to store therein a boot program or the like that is executed by the computer 9900 at the time of activation, and/or a program depending on the hardware of the computer 9900. The input/output chip 9940 may also be configured to connect various input/output units to the input/output controller 9920 via a parallel port, a serial port, a keyboard port, a mouse port and the like.

A program is provided by a computer-readable medium such as the DVD-ROM 9901 or the IC card. The program is read from the computer-readable medium, is installed into the hard disk drive 9924, the RAM 9914 or the ROM 9930, which are also examples of the computer-readable medium, and is executed by the CPU 9912. Information processing described in these programs is read into the computer 9900, resulting in cooperation between the programs and the various types of hardware resources described above. An apparatus or method may be constituted by realizing an operation or processing of information according to a use of the computer 9900.

For example, when communication is performed between the computer 9900 and an external device, the CPU 9912 may be configured to execute a communication program loaded onto the RAM 9914 to instruct the communication interface 9922 for communication processing, based on processing described in the communication program. The communication interface 9922 is configured, under control of the CPU 9912, to read transmission data stored on a transmission buffer processing area provided in a recording medium such as the RAM 9914, the hard disk drive 9924, the DVD-ROM 9901 or the IC card, and to transmit the read transmission data to a network or to write reception data received from the network to a reception buffer processing area or the like provided on the recording medium.

In addition, the CPU 9912 may be configured to cause all or a necessary portion of a file or a database, which has been stored in an external recording medium such as the hard disk drive 9924, the DVD drive 9926 (DVD-ROM 9901) and the IC card, to be read into the RAM 9914, thereby executing various types of processing on the data on the RAM 9914. Next, the CPU 9912 is configured to write the processed data back to the external recording medium.

Various types of information, such as various types of programs, data, tables, and databases, may be stored in the recording medium and may be subjected to information processing. The CPU 9912 may be configured to execute, on the data read from the RAM 9914, various types of processing including various types of operations, processing of information, conditional judgment, conditional branching, unconditional branching, search and replacement of information and the like described in the present disclosure and specified by instruction sequences of the programs, and to write a result back to the RAM 9914. The CPU 9912 may also be configured to search for information in a file, a database, etc., in the recording medium. For example, when a plurality of entries, each having an attribute value of a first attribute associated with an attribute value of a second attribute, is stored in the recording medium, the CPU 9912 may be configured to search for an entry having a specified attribute value of the first attribute that matches a condition from the plurality of entries, and to read the attribute value of the second attribute stored in the entry, thereby acquiring the attribute value of the second attribute associated with the first attribute that satisfies a predetermined condition.

The program or software modules described above may be stored in the computer-readable medium on the computer 9900 or near the computer 9900. In addition, a recording medium such as a hard disk or a RAM provided in a server system connected to a dedicated communication network or the Internet can be used as a computer-readable medium, thereby providing the programs to the computer 9900 via the network.

While the embodiments of the present invention have been described, the technical scope of the invention is not limited to the above described embodiment but only by the appended claims. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: data processing system,
20: equipment,
30: sensor,
40: gateway,
100: data processing apparatus,
110: data acquisition unit,
120: interpretation unit,
130: data recording unit,
140: output unit,
150: estimating unit,
160: input unit,
9900: computer,
9901: DVD-ROM,
9910: host controller,
9912: CPU,
9914: RAM,
9916: graphics controller,
9918: display device,
9920: input/output controller,
9922: communication interface,
9924: hard disk drive,
9926: DVD drive,
9930: ROM,
9940: input/output chip,
9942: keyboard

## Claims

1. A data processing apparatus (100) comprising:
a data acquisition unit (110) configured to acquire a data string as sensor data of a sensor (30) that is capable of measuring physical quantities of a measurement target, the sensor data being constituted with a plurality of fields;
an interpretation unit (120) configured to determine whether there is a field for which a definition is known, interpret the data string in the field for which the definition is determined to be known in accordance with the definition, and provide the data string in the field for which the definition is determined to be unknown with an indicator indicating unidentified; and
an output unit (140) configured to output the sensor data of the data string interpreted by the interpretation unit (120) in the field for which the definition is determined to be known, and to output the data string acquired by the data acquisition unit (110) as is in the field for which the definition is determined to be unknown along with the indicator indicating unidentified.

2. The data processing apparatus according to claim 1, further comprising a confirming unit (170) configured to later confirm the definition for at least one field among the plurality of fields for which the definition is determined to be unknown.

3. The data processing apparatus according to claim 2, further comprising an estimating unit (150) configured to analyze the sensor data recorded in a time series manner and estimate the definition for the at least one field based on a manner the data string in the at least one field varies.

4. The data processing apparatus according to claim 3, wherein
the output unit (140) is configured to further output the definition estimated by the estimating unit (150), and
in response to the definition estimated by the estimating unit (150) being output, when a response indicating confirmation of the definition is received, the confirming unit (170) is configured to confirm a definition for the at least one field.

5. The data processing apparatus according to claim 3 or 4, wherein the estimating unit (150) is configured to estimate that a field having no variation in the sensor data is a field that represents an identifier that identifies the sensor (30).

6. The data processing apparatus according to any one of claims 3 to 5, wherein the estimating unit (150) is configured to estimate that a field having a same value consecutively at either a beginning or an end of the sensor data is a field that represents padding.

7. The data processing apparatus according to any one of claims 3 to 6, wherein the estimating unit (150) is configured to estimate that a field which increases along a time axis in the sensor data is a field that represents a time at which the sensor (30) measured the physical quantities.

8. The data processing apparatus according to any one of claims 3 to 7, wherein the estimating unit (150) is configured to estimate a field that decreases along a time axis in the sensor data is a field that represents a remaining battery amount of the sensor (30).

9. The data processing apparatus according to any one of claims 3 to 8, wherein the estimating unit (150) is configured to estimate that a field having random variation in the sensor data is a field that represents the physical quantities measured by the sensor (30).

10. The data processing apparatus according to claim 9, wherein the estimating unit (150) is configured to estimate a type of the physical quantities measured by the sensor (30) based on the varying characteristic.

11. The data processing apparatus according to any one of claims 3 to 10, wherein the estimating unit (150) is configured to estimate a definition to be proposed for the at least one field based on a physical address of the sensor (30).

12. A data processing method comprising:
acquiring a data string as sensor data of a sensor that is capable of measuring physical quantities of a measurement target, the sensor data being constituted with a plurality of fields;
determining whether there is a field for which a definition is known (S510), interpreting the data string in the field for which the definition is determined to be known in accordance with the definition and provide the data string in the field for which the definition is determined to be unknown with an indicator indicating unidentified (S520, S530, S540, S550); and
outputting the sensor data of the data string interpreted in the interpreting in the field for which the definition is determined to be known, and to output the data string acquired in the acquiring as is in the field for which the definition is determined to be unknown along with the indicator indicating unidentified (S570).

13. A data processing program that is executed by a computer and causes the computer to function as:
a data acquisition unit (110) configured to acquire a data string as sensor data of a sensor (30) that is capable of measuring physical quantities of a measurement target, the sensor data being constituted with a plurality of fields;
an interpretation unit (120) configured to determine whether there is a field for which a definition is known, interpret the data string in the field for which the definition is determined to be known in accordance with the definition, and provide the data string in the field for which the definition is determined to be unknown with an indicator indicating unidentified; and
an output unit (140) configured to output the sensor data of the data string interpreted by the interpretation unit (120) in the field for which the definition is determined to be known, and to output the data string acquired by the data acquisition unit (110) as is in the field for which the definition is determined to be unknown along with the indicator indicating unidentified.

## Patentansprüche

1. Datenverarbeitungsvorrichtung (100), umfassend:
eine Datenerfassungseinheit (110), die so konfiguriert ist, dass sie eine Datenzeichenfolge als Sensordaten eines Sensors (30) erfasst, der in der Lage ist, physikalische Größen eines Messziels zu messen, wobei die Sensordaten aus einer Vielzahl von Feldern bestehen; eine Interpretationseinheit (120), die so konfiguriert ist, dass sie bestimmt, ob es ein Feld gibt, für das eine Definition bekannt ist, die Datenzeichenfolge in dem Feld interpretiert, für das die Definition gemäß der Definition als bekannt bestimmt wurde,
und die Datenzeichenfolge in dem Feld bereitstellt, für das die Definition als unbekannt ermittelt wurde, mit einem Indikator, der "nicht identifiziert" angibt; und eine Ausgabeeinheit (140), die so konfiguriert ist, dass sie die Sensordaten des von der Interpretationseinheit (120) interpretierten Datenstrings in dem Feld ausgibt, für das die Definition als bekannt bestimmt wird, und den von der Datenerfassungseinheit erfassten Datenstring ausgibt (110) wie in dem Feld, für das die Definition als unbekannt ermittelt wurde, zusammen mit dem Indikator, der "nicht identifiziert" angibt.

2. Datenverarbeitungsvorrichtung nach Anspruch 1, ferner umfassend eine Bestätigungseinheit (170), die so konfiguriert ist, dass sie später die Definition für mindestens ein Feld aus der Vielzahl von Feldern bestätigt, für das festgestellt wird, dass die Definition unbekannt ist.

3. Datenverarbeitungsvorrichtung nach Anspruch 2, ferner umfassend eine Schätzeinheit (150), die dazu konfiguriert ist, die in einer Zeitserie aufgezeichneten Sensordaten zu analysieren und die Definition für das mindestens eine Feld basierend auf einer Art und Weise der Datenzeichenfolge in der zu schätzen Mindestens ein Feld variiert.

4. Datenverarbeitungsvorrichtung nach Anspruch 3, wobei die Ausgabeeinheit (140) so konfiguriert ist, dass sie die von der Schätzeinheit (150) geschätzte Definition weiter ausgibt, und als Reaktion auf die Ausgabe der von der Schätzungseinheit (150) geschätzten Definition, wenn eine Antwort empfangen wird, die eine Bestätigung der Definition angibt, die Bestätigungseinheit (170) so konfiguriert ist, dass sie eine Definition für das mindestens eine Feld bestätigt.

5. Datenverarbeitungsvorrichtung nach Anspruch 3 oder 4, wobei die Schätzeinheit (150) so konfiguriert ist, dass sie schätzt, dass ein Feld ohne Variation in den Sensordaten ein Feld ist, das eine Kennung darstellt, die den Sensor (30) identifiziert.

6. Datenverarbeitungsvorrichtung nach einem der Ansprüche 3 bis 5, wobei die Schätzeinheit (150) so konfiguriert ist, dass sie schätzt, dass ein Feld, das nacheinander entweder am Anfang oder am Ende der Sensordaten denselben Wert aufweist, ein Feld ist, das steht für Auffüllen.

7. Datenverarbeitungsvorrichtung nach einem der Ansprüche 3 bis 6, wobei die Schätzeinheit (150) so konfiguriert ist, dass sie schätzt, dass ein Feld, das entlang einer Zeitachse in den Sensordaten zunimmt, ein Feld ist, das einen Zeitpunkt darstellt, zu dem der Sensor (30) die physikalischen Größen gemessen hat.

8. Datenverarbeitungsvorrichtung nach einem der Ansprüche 3 bis 7, wobei die Schätzeinheit (150) so konfiguriert ist, dass sie ein Feld schätzt, das entlang einer Zeitachse in den Sensordaten abnimmt, ein Feld ist, das eine verbleibende Batteriekapazität des Sensor (30) darstellt.

9. Datenverarbeitungsvorrichtung nach einem der Ansprüche 3 bis 8, wobei die Schätzeinheit (150) so konfiguriert ist, dass sie schätzt, dass ein Feld mit zufälliger Variation in den Sensordaten ein Feld ist, das die vom Sensor (30) gemessenen physikalischen Größen darstellt.

10. Datenverarbeitungsvorrichtung nach Anspruch 9, wobei die Schätzeinheit (150) dazu konfiguriert ist, eine Art der vom Sensor (30) gemessenen physikalischen Größen basierend auf der variierenden Charakteristik zu schätzen.

11. Datenverarbeitungsvorrichtung nach einem der Ansprüche 3 bis 10, wobei die Schätzeinheit (150) dazu konfiguriert ist, eine für das mindestens eine Feld vorzuschlagende Definition basierend auf einer physikalischen Adresse des Sensors (30) zu schätzen.

12. Ein Datenverarbeitungsverfahren, umfassend: Erfassen einer Datenzeichenfolge als Sensordaten eines Sensors, der physikalische Größen eines Messziels messen kann, wobei die Sensordaten aus einer Vielzahl von Feldern bestehen; Bestimmen, ob es ein Feld gibt, für das eine Definition bekannt ist (S510), Interpretieren der Datenzeichenfolge in dem Feld, für das die Definition gemäß der Definition als bekannt bestimmt wurde, und Bereitstellen der Datenzeichenfolge in dem Feld, für das die Definition bekannt ist als unbekannt bestimmt, mit einem Indikator, der auf "nicht identifiziert" hinweist (S520, S530, S540, S550); und Ausgeben der Sensordaten des beim Interpretieren interpretierten Datenstrings in dem Feld, für das die Definition als bekannt bestimmt wird, und Ausgeben des beim Akquirieren erfassten Datenstrings unverändert in dem Feld, für das die Definition als unbekannt ermittelt wird wobei die Anzeige "Nicht identifiziert" anzeigt (S570).

13. Ein Datenverarbeitungsprogramm, das von einem Computer ausgeführt wird und bewirkt, dass der Computer wie folgt funktioniert: eine Datenerfassungseinheit (110), die so konfiguriert ist, dass sie eine Datenzeichenfolge als Sensordaten eines Sensors (30) erfasst, der in der Lage ist, physikalische Größen eines Messziels zu messen, wobei die Sensordaten aus einer Vielzahl von Feldern bestehen; eine Interpretationseinheit (120), die so konfiguriert ist, dass sie bestimmt, ob es ein Feld gibt, für das eine Definition bekannt ist, die Datenzeichenfolge in dem Feld interpretiert, für das die Definition gemäß der Definition als bekannt bestimmt wurde, und die Datenzeichenfolge in dem Feld bereitstellt Feld, für das die Definition als unbekannt ermittelt wurde, mit einem Indikator, der "nicht identifiziert" angibt; und eine Ausgabeeinheit (140), die so konfiguriert ist, dass sie die Sensordaten des von der Interpretationseinheit (120) interpretierten Datenstrings in dem Feld ausgibt, für das die Definition als bekannt bestimmt wird, und den von der Datenerfassungseinheit (110) erfassten Datenstring wie in dem Feld ausgibt, für das die Definition als unbekannt ermittelt wurde, zusammen mit dem Indikator, der "nicht identifiziert" angibt.

## Revendications

1. Appareil de traitement de données (100) comprenant :
une unité d'acquisition de données (110) configurée pour acquérir une chaîne de données sous forme de données de capteur d'un capteur (30) qui est capable de mesurer des quantités physiques d'une cible de mesure, les données de capteur étant constituées d'une pluralité de champs ;
une unité d'interprétation (120) configurée pour déterminer l'existence ou non d'un champ pour lequel une définition est connue, interpréter la chaîne de données dans le champ pour lequel la définition est déterminée comme connue conformément à la définition, et fournir la chaîne de données dans le champ pour lequel la définition est déterminée comme inconnue avec un indicateur indiquant non identifié ; et
une unité de sortie (140) configurée pour produire en sortie les données de capteur de la chaîne de données interprétée par l'unité d'interprétation (120) dans le champ pour lequel la définition est déterminée comme connue, et pour produire en sortie la chaîne de données acquise par l'unité d'acquisition de données (110) telle que dans le champ pour lequel la définition est déterminée comme inconnue avec l'indicateur indiquant non identifié.

2. L'appareil de traitement de données selon la revendication 1, comprenant en outre une unité de confirmation (170) configurée pour confirmer ultérieurement la définition pour au moins un champ parmi la pluralité de champs pour lesquels la définition est déterminée commue inconnue.

3. L'appareil de traitement de données selon la revendication 2, comprenant en outre une unité d'estimation (150) configurée pour analyser les données de capteur enregistrées sous forme de série temporelle et estimer la définition pour l'au moins un champ selon une manière dont la chaîne de données dans l'au moins un champ varie.

4. L'appareil de traitement de données selon la revendication 3, dans lequel
l'unité de sortie (140) est configurée pour produire en sortie en outre la définition estimée par l'unité d'estimation (150), et
en réaction à la définition estimée par l'unité d'estimation (150) produite en sortie, lorsqu'une réaction indiquant une confirmation de la définition est reçue, l'unité de confirmation (170) est configurée pour confirmer une définition pour l'au moins un champ.

5. L'appareil de traitement de données selon la revendication 3 ou 4, dans lequel l'unité d'estimation (150) est configurée pour estimer qu'un champ ne présentant aucune variation dans les données de capteur est un champ qui représente un identificateur qui identifie le capteur (30).

6. L'appareil de traitement de données selon l'une quelconque des revendications 3 à 5, dans lequel l'unité d'estimation (150) est configurée pour estimer qu'un champ présentant une même valeur consécutivement soit à un début, soit à une fin des données de capteur est un champ qui représente un complément.

7. L'appareil de traitement de données selon l'une quelconque des revendications 3 à 6, dans lequel l'unité d'estimation (150) est configurée pour estimer qu'un champ qui augmente sur un axe temporel dans les données de capteur est un champ qui représente une heure à laquelle le capteur (30) a mesuré les quantités physiques.

8. L'appareil de traitement de données selon l'une quelconque des revendications 3 à 7, dans lequel l'unité d'estimation (150) est configurée pour estimer qu'un champ qui diminue sur un axe temporel dans les données de capteur est un champ qui représente une quantité de batterie restante du capteur (30).

9. L'appareil de traitement de données selon l'une quelconque des revendications 3 à 8, dans lequel l'unité d'estimation (150) est configurée pour estimer qu'un champ présentant une variation dans les données de capteur est un champ qui représente les quantités physiques mesurées par le capteur (30).

10. L'appareil de traitement de données selon la revendication 9, dans lequel l'unité d'estimation (150) est configurée pour estimer un type des quantités physiques mesurées par le capteur (30) selon la caractéristique variable.

11. L'appareil de traitement de données selon l'une quelconque des revendications 3 à 10, dans lequel l'unité d'estimation (150) est configurée pour estimer une définition à proposer pour l'au moins un champ selon une adresse physique du capteur (30).

12. Procédé de traitement de données comprenant :
une acquisition d'une chaîne de données sous forme de données de capteur d'un capteur qui est capable de mesurer des quantités physiques d'une cible de mesure, les données de capteur étant constituées d'une pluralité de champs ;
une détermination de l'existence ou non d'un champ pour lequel une définition est connue (S510), une interprétation de la chaîne de données dans le champ pour lequel la définition est déterminée comme connue conformément à la définition, et une fourniture de la chaîne de données dans le champ pour lequel la définition est déterminée comme inconnue avec un indicateur indiquant non identifié (S520, S530, S540, S550) ; et
une sortie des données de capteur de la chaîne de données interprétée lors de l'interprétation dans le champ pour lequel la définition est déterminée comme connue, et une production en sortie de la chaîne de données acquise lors de l'acquisition telle que de champ pour lequel la définition est déterminée comme inconnue avec l'indicateur indiquant non identifié (S570).

13. Programme de traitement de données qui est exécuté par un ordinateur et fait fonctionner l'ordinateur en tant que :
une unité d'acquisition de données (110) configurée pour acquérir une chaîne de données sous forme de données de capteur d'un capteur (30) qui est capable de mesurer des quantités physiques d'une cible de mesure, les données de capteur étant constituées d'une pluralité de champs ;
une unité d'interprétation (120) configurée pour déterminer l'existence ou non d'un champ pour lequel une définition est connue, interpréter la chaîne de données dans le champ pour lequel la définition est déterminée comme connue conformément à la définition, et fournir la chaîne de données dans le champ pour lequel la définition est déterminée comme inconnue avec un indicateur indiquant non identifié ; et
une unité de sortie (140) configurée pour produire en sortie les données de capteur de la chaîne de données interprétée par l'unité d'interprétation (120) dans le champ pour lequel la définition est déterminée comme connue, et pour produire en sortie la chaîne de données acquise par l'unité d'acquisition de données (110) telle que dans le champ pour lequel la définition est déterminée comme inconnue avec l'indicateur indiquant non identifié.
